# EUROPÄISCHE PATENTSCHRIFT

(11) **EP 2 141 032 B1**
(45) Veröffentlichungstag und Bekanntmachung des Hinweises auf die Patenterteilung: **31.03.2010**
(21) Anmeldenummer: 08011846.6
(22) Anmeldetag: 01.07.2008
(51) Int. Cl.: B60C 17/04

(54) **Notlaufeinsatz für ein Fahrzeugrad mit Spannsystem**
Runflat insert for vehicle wheel with locking means
Utilisation dégradée pouvant être tendue

(43) Veröffentlichungstag der Anmeldung: 06.01.2010
(73) Patentinhaber: Europlast-Nycast GmbH, 40882 Ratingen-Homberg (DE)
(72) Erfinder: Seelig, Hans G., 45149 Essen (DE)
(74) Vertreter: DR. STARK & PARTNER

(56) Entgegenhaltungen:
- WO-A-03/106199
- DE-U1- 29 800 079
- JP-A- 2002 059 720
- US-A- 3 976 114

## Beschreibung

Die Erfindung betrifft einen verspannbaren Notlaufeinsatz für ein aus Felge und darauf angeordneter Luftbereifung bestehendes Kraftfahrzeugrad, mit wenigstens zwei, insbesondere drei kreisringsegmentförmigen Teilelementen, die über Spannsysteme miteinander verspannbar sind, wobei der Notlaufeinsatz mehrteilig ausgebildet ist und auch einen auf der Außenseite der Felge anbringbaren Statorring umfasst und die Teilelemente als auf dem Statorring montierbarer Rotor ausgebildet sind, wobei das Spannsystem als ein Spannschloss zur Verbindung der an den schlitzförmigen Freiraum angrenzenden freien Enden der Teilelemente des Rotors ausgebildet ist.

Aus der Praxis sowie aus der gattungsgemäßen WO-03/106 199 sind derartige Notlaufeinsätze bekannt, bei denen die Verbindung der Teilelemente des Rotors mittels Schrauben erfolgt, die durch die Teilelemente hindurch geführt sind und die an ihren endseitig durch die Teilelemente hindurchragenden Endbereichen mittels entsprechender Muttern gesichert sind. Nachteilig ist, dass es beim Anziehen der Schrauben durch die Muttern zu einer erhöhten Flächenpressung kommen kann, was zu Beeinträchtigungen oder Beschädigungen der entsprechenden Bereiche führen kann.

Aufgabe der Erfindung ist es, die vorgenannten Nachteile zu vermeiden und einen Notlaufeinsatz anzugeben, der bessere Gebrauchseigenschaften aufweist.

Diese Aufgabe wird dadurch gelöst, dass die Teilelemente des Rotors aus einem Gussmaterial, insbesondere aus Kunststoff oder einem Kompositwerkstoff, bestehen und das Spannschloss Schrauben umfasst, welche die beiden Teilelemente des Rotors miteinander verbinden, wobei in dem einen Teilelement wenigstes eine insbesondere allseitig eingegossene und mit zumindest einer Bohrung, insbesondere Durchgangsbohrung, mit einem Innengewinde für die Schraube(n) versehene Platte eingegossen ist. Diese Platte kann insbesondere aus metallischem Material, wie z. B. Stahl, bestehen. Dabei ist die Bohrung nicht auf einen durch Bohren hergestellten Freiraum beschränkt, sondern umfasst auch mittels anderer, insbesondere nicht spanabhebender Verfahren erzielte Freiräume.

Hierdurch ist eine bessere Kraftverteilung durch eine geringere Flächenpressung gegeben. Darüber hinaus muss während der Montage nicht eine Schraubenmutter in ihre Montageposition gebracht und dort während des Festziehens der Schraube gegen Verdrehen gesichert werden.

Vorzugsweise kann die Platte eine Ummantelung aus einem elastischen Material, insbesondere in Form einer PU-Schicht, umfassen, so dass eine Pufferschicht gegeben ist, mittels der Spannungen im Inneren der Teilelemente des Rotors aufgrund des verschiedenen Dehnungsverhaltens bei unterschiedlichen Materialien von Teilelement und Platte vermeidet.

Erfindungsgemäß können zwei Platten für jeweils zumindest eine Schraube vorgesehen sein, so dass eine gegenseitige Beeinflussung der Platten beim Festziehen der mit den jeweiligen Platten zusammenwirkenden Schrauben vermieden wird.

Vorteilhafterweise können die beiden Platten jeweils an wenigstens einem Ende eine um wenigstens die Hälfte verringerte Materialstärke aufweisen und einander in diesem Teilbereich überlappend angeordnet sein, so dass ein seitlicher Abstand zur Vermeidung der vorgenannten gegenseitigen Beeinflussung nicht erforderlich ist.

Bei einem bevorzugten Ausführungsbeispiel kann zumindest eine Platte jeweils an wenigstens einem Ende abgerundete Ecken aufweist, insbesondere eine halbkreisförmig abgerundete Außenkontur haben, so dass auch bei aneinander angrenzenden Platten keine gegenseitige Beeinflussung erfolgt und (theoretisch) ein freies Verdrehen möglich ist.

Erfindungsgemäß kann zumindest eine Platte wenigstens eine zusätzliche Durchgangsbohrung aufweisen, so dass diese beim Giessen des Teilelements des Rotors ebenfalls mit Gussmaterial gefüllt wird bzw. somit eine verbesserte Verankerung der Platte im Material des Teilelements des Rotors bewirkt. Dabei ist die Durchgangsbohrung nicht auf einen durch Bohren hergestellten Durchgang beschränkt, sondern umfasst auch mittels anderer, insbesondere nicht spanabhebender Verfahren erzielte Durchgänge. Vorteilhafterweise kann zumindest eine Platte wenigstens eine Bohrung, insbesondere Durchgangsbohrung, mit einem Innengewinde für eine Schraube zu Halte- und Ausrichtzwecken beim Eingießen der Platte aufweisen.

Bei einem bevorzugten Ausführungsbeispiel der Erfindung kann der Rotor und seine Teilelemente aus einem Thermoplast, wie z. B. einem Guss-Polyamid, bestehen.

Im Folgenden wird in der Zeichnung dargestelltes Ausführungsbeispiel der Erfindung erläutert. Es zeigen in schematischen Schnittdarstellungen:
- Fig. 1: eine Seitenansicht eines Ausführungsbeispiels des Rotors eines erfindungsgemäßen Notlaufein- satzes,
- Fig. 2: den Schnitt "A-A" des Gegenstandes nach Fig. 1,
- Fig. 3: den Schnitt "B-B" des Gegenstandes nach Fig. 1,
- Fig. 4: eine Detailansicht einer Platte des Gegenstan- des nach Fig. 1 und

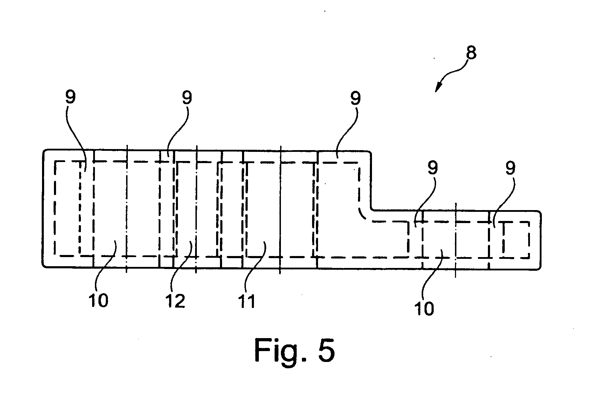

- Fig. 5: eine Seitenansicht des Gegenstandes nach Fig. 4.

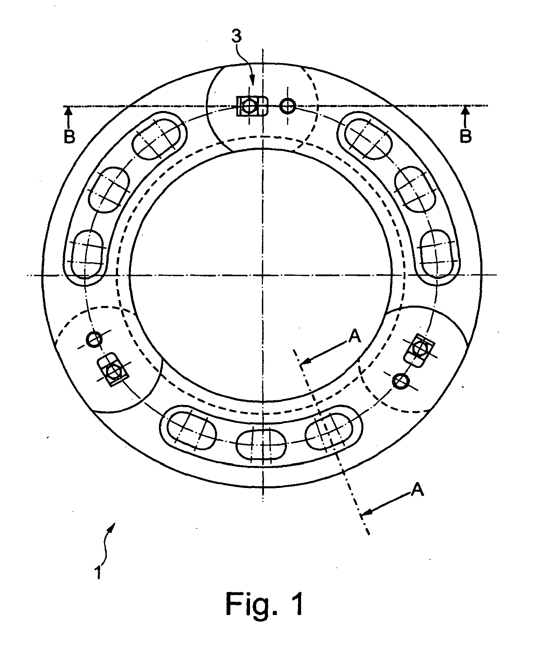

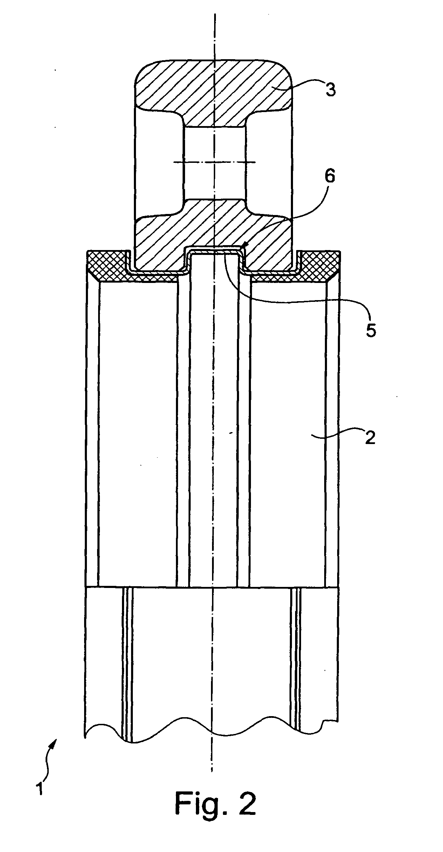

Die Figuren 1 und 2 zeigen in verschiedenen Ansichten einen verspannbaren Notlaufeinsatz 1 für ein in der Zeichnung nicht dargestelltes, aus Felge und darauf angeordneter Luftbereifung bestehendes, Kraftfahrzeugrad.

Der Notlaufeinsatz 1 ist dabei zweigeteilt ausgebildet und beinhaltet einen auf der Felge angebrachten, in der Fig. 1 nicht dargestellten Statorring 2 und einen auf dem Statorring 2 aufsitzenden Rotor 3, der sich wiederum aus kreisringsegmentförmigen, über Spannsysteme 4 miteinander verspannbaren Teilelementen zusammensetzt.

Im Querschnitt gesehen ist der Statorring 2 mit einem in etwa mittig umlaufenden, sich in Richtung des Rotors 3 erstreckenden mäanderförmigen Wulst 5 versehen, der mit einer entsprechenden Gegenausnehmung 6 des Rotors 3 zusammen als Führung für den Rotor 3 ausgebildet ist.

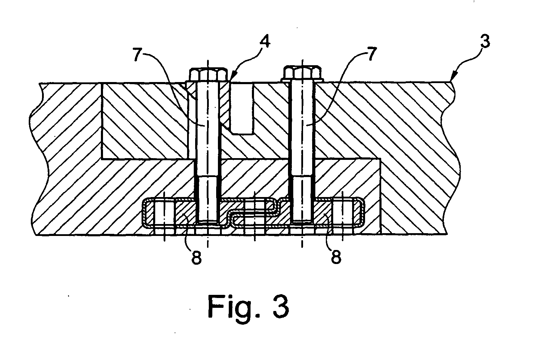

Fig. 3 zeigt den Verbindungsbereich der Teilelemente des Rotors 3, wobei zwei als Schrauben 7 ausgebildete Verbindungselemente zur weiteren Stabilisierung der Überlappungsverbindung vorgesehen sind.

Die beiden Schrauben 7 durchfassen zur besseren Verteilung der Kraft zwei Platten 8, die in ein Teilelement des Rotors 3 eingegossen sind. Dabei weisen die beiden Platten 8 jeweils an den einander zugewandten Enden eine um ca. die Hälfte verringerte Materialstärke auf und sind in diesem Teilbereich überlappend angeordnet.

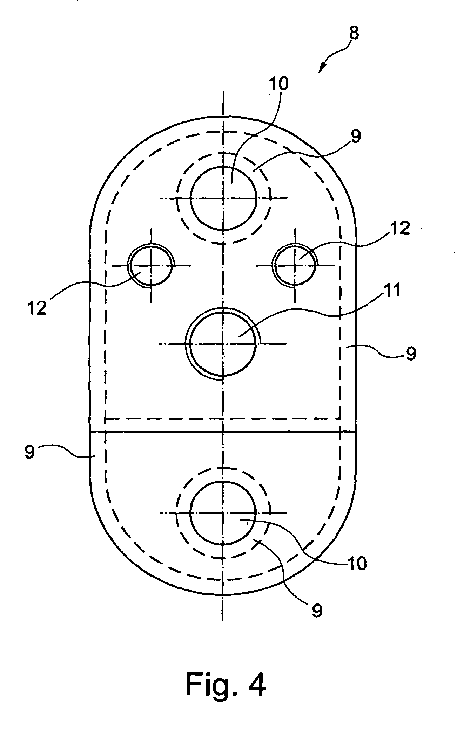

Wie aus Fig. 4 ersichtlich, weist zumindest eine Platte 8 jeweils an ihren Enden eine halbkreisförmig abgerundete Außenkontur auf und ist mit einer Ummantelung in Form einer elastischen PU-Schicht 9 versehen. Diese PU-Schicht 9 erstreckt sich bis in zwei zusätzliche Durchgangsbohrungen 10, die wiederum nach dem Giessen des Teilelements des Rotors 3 ebenfalls mit dem Gussmaterial des Rotors 3 gefüllt sind. Somit sind die Platten 8 an ihren jeweiligen freien Enden und an den einander überlappenden Enden von dem Gussmaterial des Rotors 3 durchdrungen.

Weiterhin sind neben einer Bohrung 11 mit Innengewinde für die Schraube 7 des Spannsystems zwei weitere Durchgangsbohrungen 12, jeweils mit einem Innengewinde für in der Zeichnung nicht dargestellte Schrauben zu Halte- und Ausrichtzwecken beim Eingießen der Platte 8, vorgesehen.

## Patentansprüche

1. Verspannbarer Notlaufeinsatz (1) für ein aus Felge und darauf angeordneter Luftbereifung bestehendes Kraftfahrzeugrad, mit wenigstens zwei, insbesondere drei kreisringsegmentförmigen Teilelementen, die über Spannsysteme miteinander verspannbar sind, wobei der Notlaufeinsatz (1) mehrteilig ausgebildet ist und auch einen auf der Außenseite der Felge anbringbaren Statorring (2) umfasst und die Teilelemente als auf dem Statorring (2) montierbarer Rotor (3) ausgebildet sind, wobei das Spannsystem (4) als ein Spannschloss zur Verbindung der an den schlitzförmigen Freiraum angrenzenden freien Enden der Teilelemente des Rotors (3) ausgebildet ist, wobei das Spannschloss Schrauben (7) umfasst, welche die beiden Teilelemente des Rotors (3) miteinander verbinden, **dadurch gekennzeichnet, dass** die Teilelemente des Rotors (3) aus einem Gussmaterial, insbesondere aus Kunststoff oder einem Kompositwerkstoff, bestehen, wobei in dem einen Teilelement wenigstes eine allseitig eingegossene und mit zumindest einer Bohrung, insbesondere Durchgangsbohrung (11), mit einem Innengewinde für die Schraube(n) (7) versehene Platte eingegossen ist.

2. Notlaufeinsatz (1) nach dem vorhergehenden Anspruch, **dadurch gekennzeichnet, dass** die Platte (8) eine Ummantelung aus einem elastischen Material, insbesondere in Form einer PU-Schicht (9), umfasst.

3. Notlaufeinsatz (1) nach einem der vorhergehenden Ansprüche, **dadurch gekennzeichnet, dass** zwei Platten (8) für jeweils zumindest eine Schraube (7)vorgesehen sind.

4. Notlaufeinsatz (1) nach dem vorhergehenden Anspruch, **dadurch gekennzeichnet, dass** die beiden Platten (8) jeweils an wenigstens einem Ende eine um wenigstens die Hälfte verringerte Materialstärke aufweisen und einander in diesem Teilbereich überlappend angeordnet sind.

5. Notlaufeinsatz (1) nach einem der vorhergehenden Ansprüche, **dadurch gekennzeichnet, dass** zumindest eine Platte (8) jeweils an wenigstens einem Ende abgerundete Ecken aufweist, insbesondere eine halbkreisförmig abgerundete Außenkontur hat.

6. Notlaufeinsatz (1) nach einem der vorhergehenden Ansprüche, **dadurch gekennzeichnet, dass** zumindest eine Platte (8) wenigstens eine zusätzliche Durchgangsbohrung (10) aufweist.

7. Notlaufeinsatz (1) nach einem der vorhergehenden Ansprüche, **dadurch gekennzeichnet, dass** zumindest eine Platte (8) wenigstens eine Bohrung, insbesondere Durchgangsbohrung (12), mit einem Innengewinde für eine Schraube zu Halte- und Ausrichtzwecken beim Eingießen der Platte (8) aufweist.

8. Notlaufeinsatz (1) nach einem der vorhergehenden Ansprüche, **dadurch gekennzeichnet, dass** der Rotor (3) aus einem Thermoplast, insbesondere Guss-Polyamid, besteht.

## Claims

1. Tensionable run-flat insert (1) for a vehicle wheel consisting of a rim and pneumatic tyre arranged thereon, with at least two, in particular three ring segment-shaped partial elements which can be tensioned against each other by means of a tensioning system, the run-flat insert (1) being designed in several parts and also including a stator ring (2) which can be attached to the exterior of the rim and the partial elements are designed as a rotor (3) which can be mounted on the stator ring (2), while the tensioning system (4) is designed as a tension jack to link the free ends of the partial elements of the rotor (3) bordering the slot shaped free space, the tension jack including screws (7) which join together the two partial elements of the rotor (3), **characterised in that** the partial elements of the rotor (3) consist of a cast material, in particular of plastic or a composite material, while at least one plate which is all-round cast and provided with at least one hole, in particular a through-hole (11) with an internal thread for the screw(s) (7) is cast in the one partial element.

2. Run-flat insert (1) according to the previous claim, **characterised in that** the plate (8) includes a sheath made from an elastic material, in particular in the form of a PU layer (9).

3. Run-flat insert (1) according to one of the preceding claims, **characterised in that** two plates (8) are provided each for at least one screw (7).

4. Run-flat insert (1) according to the previous claim, **characterised in that** both plates (8) each have on at least one end a material thickness which is reduced by at least half and are arranged overlapping each other in this partial area.

5. Run-flat insert (1) according to one of the preceding claims, **characterised in that** at least one plate (8) has in each case on at least one end rounded corners, in particular a semicircular rounded-off outer contour.

6. Run-flat insert (1) according to one of the preceding claims, **characterised in that** at least one plate (8) has at least one additional through-hole (10).

7. Run-flat insert (1) according to one of the preceding claims, **characterised in that** at least one plate (8) has at least one hole, in particular a through-hole (12) with an internal thread for a screw for retaining and alignment purposes when the plate (8) is being cast.

8. Run-flat insert (1) according to one of the preceding claims, **characterised in that** the rotor (3) is made of a thermoplastic, in particular cast polyamide.

## Revendications

1. Insert de roulage à plat (1) pouvant être assemblé avec serrage, pour une roue de véhicule automobile constituée d'une jante et d'un pneumatique disposé sur cette jante, avec au moins deux et notamment trois éléments partiels en forme de segments d'anneau de cercle, qui peuvent être mutuellement assemblés avec serrage au moyen de systèmes de serrage, sachant que l'insert de roulage à plat (1) est réalisé en plusieurs parties et comprend également une bague de stator (2) pouvant être installée sur le côté extérieur de la jante, et que les éléments partiels sont conçus comme rotor (3) pouvant être monté sur la bague de stator (2), sachant que le système de serrage (4) est réalisé sous la forme d'un tendeur à vis destiné à assembler les extrémités libres, limitrophes de l'espace libre en forme de fente, des éléments partiels du rotor (3), sachant que le tendeur à vis comprend des vis (7) qui relient entre eux les deux éléments partiels du rotor (3), **caractérisé en ce que** les éléments partiels du rotor (3) sont constitués d'un matériau coulé, notamment de matière plastique ou d'un matériau composite, sachant que dans un des éléments partiels, on incorpore au moins une plaque noyée sur tous les côtés et pourvue d'au moins un perçage, notamment d'un perçage traversant (11), doté d'un filetage intérieur pour la(les) vis (7).

2. Insert de roulage à plat (1) selon la revendication précédente, **caractérisé en ce que** la plaque (8) comprend un enrobage en un matériau élastique, en particulier sous la forme d'une couche de polyuréthane (9).

3. Insert de roulage à plat (1) selon l'une des revendications précédentes, **caractérisé en ce qu'**il est prévu deux plaques (8), prévues chacune pour au moins une vis (7).

4. Insert de roulage à plat (1) selon l'une des revendications précédentes, **caractérisé en ce que** les deux plaques (8) présentent chacune, à au moins une extrémité, une épaisseur de matériau réduite au moins de moitié, et sont disposées en se chevauchant mutuellement dans cette région partielle.

5. Insert de roulage à plat (1) selon l'une des revendications précédentes, **caractérisé en ce qu'**au moins une plaque (8) présente des coins respectifs arrondis à au moins une extrémité, en particulier possède un contour extérieur arrondi en forme de demi-cercle.

6. Insert de roulage à plat (1) selon l'une des revendications précédentes, **caractérisé en ce qu'**au moins une plaque (8) présente au moins un perçage traversant supplémentaire (10).

7. Insert de roulage à plat (1) selon l'une des revendications précédentes, **caractérisé en ce qu'**au moins une plaque (8) présente au moins un perçage, notamment un perçage traversant (12), doté d'un filetage intérieur pour une vis prévue à des fins de maintien et d'alignement lors de l'incorporation de la plaque (8).

8. Insert de roulage à plat (1) selon l'une des revendications précédentes, **caractérisé en ce que** le rotor (3) est constitué d'un matériau thermoplastique, en particulier de polyamide coulé.
